# FASCICULE DE BREVET EUROPEEN

(11) **EP 0 728 255 B1**
(45) Date de publication et mention de la délivrance du brevet: **06.12.2000**
(21) Numéro de dépôt: 95925040.8
(22) Date de dépôt: 11.07.1995
(51) Int. Cl.: E21B 43/34, B01D 19/00, F16K 5/04

(54) **BALLON REGULATEUR POUR EFFLUENTS POLYPHASIQUES ET MOYENS DE PRELEVEMENTS ASSOCIES**
TANK ZUR REGELUNG EINES MEHRPHASENFLUSSES SOWIE DAMIT VERBUNDENE ENTNAHMEMITTEL
CONTROL FLASK FOR POLYPHASIC EFFLUENTS AND EXTRACTION ASSEMBLY THEREFOR

(30) Priorité: 13.07.1994 FR 9408766
(43) Date de publication de la demande: 28.08.1996
(73) Titulaire: INSTITUT FRANCAIS DU PETROLE, 92500 Rueil Malmaison (FR)
(72) Inventeur: TALON, René, F-78240 Carrières-sur-Seine (FR)
(86) Numéro de dépôt international: FR9500930
(87) Numéro de publication internationale: WO9602732

(56) Documents cités:
- EP-A- 0 339 187
- DE-C- 842 124
- FR-A- 2 642 539
- GB-A- 1 129 506
- GB-A- 2 179 450
- US-A- 3 025 880
- US-A- 3 208 719

## Description

La présente invention concerne un ballon régulateur pour fluides polyphasiques et les moyens de prélèvements associés.

L'écoulement de fluides, constitués d'un mélange de gaz, de liquide et éventuellement de matière solide, pose d'importants problèmes de régulation de débit. En effet, le comportement des fluides polyphasiques est bien plus complexe que celui d'écoulements monophasiques. Ce problème de régulation de débit est d'autant plus critique que le fluide doit être comprimé dans une machine tournante ou alternative.

L'objet de l'invention est de proposer un dispositif qui permette de mieux maîtriser le contrôle de l'écoulement polyphasique.

L'idée principale de la présente demande de brevet réside dans le fait que les moyens de prélèvements ont des sections de prélèvement ajustables. De plus les sections de passage ajustables sont répartis à différentes hauteurs, par exemple sur une verticale ou une ligne inclinée, de part et d'autre de la zone ou l'interface de séparation gaz, liquide en fonctionnement normal. Ainsi une variation de position de l'interface entraîne un effet automatique de régulation du niveau. Selon la présente invention il n'est pas nécessaire d'arrêter l'écoulement polyphasique et de démonter des éléments de l'ensemble ballon plus moyens de prélèvements pour ajuster les sections de passage des moyens de prélèvement. Les moyens de prélèvement selon la présente invention pourront être dits à géométrie variable.

De plus, le ballon régulateur joue le rôle d'un ballon-tampon du fait du temps de résidence du fluide polyphasique au sein de la capacité qu'il représente.

Le dimensionnement du système régulateur n'utilisant que des équations simplifiées de la mécanique des fluides, il sera aisé de le dimensionner ainsi que de déterminer les lois de transferts de ce ballon.

Par ailleurs, la présente invention permet d'assurer un fonctionnement satisfaisant d'un moyen de pompage polyphasique bien que les conditions physiques du fluide polyphasique à pomper (notamment le GLR, pression...) varie sur une large plage.

Il est rappelé que le GLR (Gaz to Liquid Ratio) est un rapport volumétrique qui caractérise un écoulement polyphasique. Le GLR est égal au rapport du volume de gaz au volume de liquide.

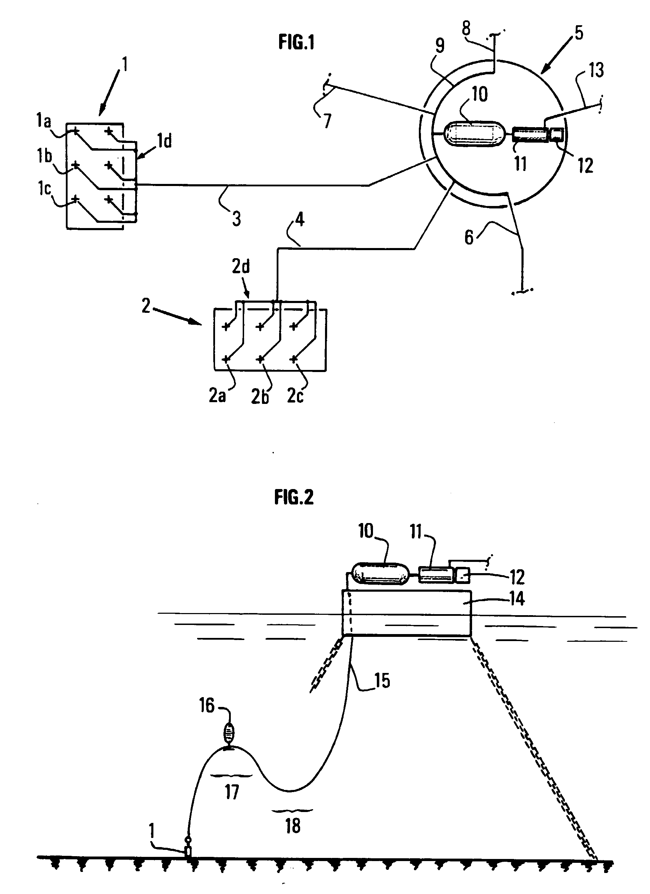

L'art antérieur peut être illustré par le brevet FR : 2.642.539. Les moyens de prélèvements de l'effluent polyphasique décrit dans ce document antérieur ont des sections de passage constantes dans le temps qui ne permettent pas une bonne adaptation aux conditions d'écoulement du fluide polyphasique. Cela sera expliqué plus loin dans la description détaillée en relation avec les figures 1 à 3.

La présente invention convient parfaitement au domaine pétrolier. En effet, certains puits producteurs fournissent un mélange liquide (huile et/ou eau) et de gaz qu'il convient de transférer sur un site d'utilisation ou de stockage. Le transfert se fait traditionnellement en séparant le gaz et le liquide, puis en comprimant le gaz et en pompant le liquide séparément. L'utilisation d'une pompe polyphasique permet d'acheminer l'ensemble gaz et liquide en une seule opération. Les pompes polyphasiques utilisées pour effectuer ce genre de transfert acceptent une variation limitée du GLR à leur entrée limitée. Afin d'adapter le fonctionnement de ces pompes aux caractéristiques du fluide provenant de puits producteurs, il convient d'interposer entre les puits et la pompe, un ballon régulateur.

L'objet de la présente invention est de proposer un ballon régulateur perfectionné, permettant une adaptation, éventuellement permanente, des moyens de prélèvements aux variations des conditions d'écoulement du puits, notamment à la variation de sa composition.

La présente invention concerne un ballon comportant au moins un moyen de prélèvements du fluide contenu dans ce ballon, ledit moyen de prélèvement comporte une section de passage pour le prélèvement dudit fluide qui s'étend sur une portion substantielle de la hauteur dudit ballon. Le ballon selon l'invention se caractérise en ce que les moyens de prélèvements comportent des moyens de modifications de ladite section de passage.

Les moyens de prélèvements et de modifications de la section de passage peuvent comporter au moins deux surfaces ajourées qui se déplacent l'une par rapport à l'autre de manière à modifier ladite section de passage.

Ces surfaces peuvent être des cylindres de révolution de préférence coaxiale.

L'un des cylindres pourra être fixe par rapport audit ballon et l'autre mobile en rotation autour de son axe de révolution et le cylindre mobile pourra comporter des moyens de mise en rotation extérieurs audit ballon.

Les tubes cylindres pourront être verticaux lorsque le ballon est en position de fonctionnement.

Le ballon selon l'invention pourra comporter une enveloppe cylindrique. L'enveloppe cylindrique et les moyens de prélèvements pourront être positionnés l'un par l'autre pour qu'en position de fonctionnement l'axe de l'enveloppe cylindrique soit vertical ou horizontal.

La section passage des moyens de prélèvements pourra être sensiblement située du côté opposé à l'orifice d'entrée du fluide dans le ballon régulateur, cela relativement à l'axe des moyens de prélèvements.

Les moyens de prélèvements pourront comporter au moins une section fixe supplémentaire située à la partie inférieure desdits moyens de prélèvements pour le prélèvement d'une phase liquide.

Les moyens de prélèvements pourront comporter au moins une section fixe supplémentaire située à la partie supérieure desdits moyens de prélèvements pour le prélèvement d'une phase gazeuse.

Les moyens de prélèvements pourront être connectés à l'aspiration d'une pompe polyphasique.

Les moyens de modifications de la section de passage pourront être asservis en fonction d'une ou plusieurs grandeurs liées aux conditions physiques du fluide à traiter en amont et/ou dans le ballon-tampon et des conditions mécaniques du fonctionnement de la pompe.

La présente invention concerne également un procédé de régulation d'un effluent polyphasique. Ce procédé comporte les étapes suivantes
a)introduction de l'effluent polyphasique dans un ballon amortisseur comportant des moyens de prélèvement de l'effluent polyphasique
b)réglage de la section de passage de l'effluent polyphasique des moyens de prélevement en fonction de conditions d'écoulement déterminées.

La présente invention sera mieux comprise et ses spécificités apparaîtront à la description nullement limitative qui suit, illustrée par les dessins ci-joints, parmi lesquels :
- la figure 1 représente une vue d'ensemble d'un schéma de production,
- la figure 2 représente un cas d'application au domaine marin,
- la figure 3 représente les effets du ballon régulateur selon la présente invention,
- la figure 4 représente une vue schématique d'un ballon régulateur équipé d'un tube de prélèvement selon la présente invention,
- la figure 5 représente un système de commande des moyens de prélèvements,
- la figure 6 représente un détail des moyens de prélèvements,
- les figures 6a à 6h représentent différentes formes pour les ouvertures des cylindres des moyens de prélèvements,
- la figure 7 représente un système selon la présente invention équipé des moyens de régulation et de commande des moyens de prélèvements,
- la figure 8 représente un schéma selon lequel un même ballon comporte plusieurs tubes de prélèvements selon l'invention alimentant chacun une pompe polyphasique.

Sur la figure 1, les références 1 et 2 désignent deux zones de production pétrolière. Chacune pouvant comporter plusieurs puits de production 1a, 1b, 1c, 2a, 2b, 2c, l'ensemble de la production de chacune des zones étant collecter par une canalisation 1d, 2d pour les zones 1 et 2. La ligne 3 relie le premier site de production pétrolière à une station de pompage. La ligne 4 relie la station de pompage 5 à l'ensemble des puits producteurs de la seconde zone. Différentes lignes collectrices provenant de différents sites de production rejoignent la station de pompage 5 telles les lignes 6, 7 et 8. La production provenant de ces différentes lignes est rassemblée par un collecteur 9 qui alimente le ballon régulateur 10. Ce ballon est relié à l'aspiration d'une pompe 11 entraînée par un moteur éventuellement électrique 12. Le fluide pompé par la pompe 11 est acheminé par la canalisation 13 vers un lieu de destination non représenté par exemple une plate-forme principale selon les schémas illustrés par le brevet US-5.226.482 dont le contenu est réputé faire partie du présent texte.

Un tel schéma trouve particulièrement son application dans le domaine de la production marine (voir la figure 2). L'ensemble des puits 1 est relié à une bouée flottante 14 par une ligne flexible 15. Cette ligne flexible peut avoir la forme d'un S grâce, notamment, à l'utilisation d'une bouée 16. Sur la bouée 14 se trouvent notamment le ballon régulateur 10, la pompe 11 et le moteur d'entraînement 12.

En fonction des mouvements de la houle et des conditions météorologiques, le système schématisé à la figure 2 peut entraîner des changements dans les caractéristiques du fluide à pomper à l'entrée de la pompe changeantes. En effet, la forme en S et les mouvements verticaux de va-et-vient des deux boucles 17 et 18 du flexible entraînent des variations des caractéristiques de l'écoulement polyphasique qui se superposent aux variations de GLR de l'effluent à la sortie des puits polyphasiques. Ces variations concernent notamment le type d'écoulement polyphasique, le GLR...

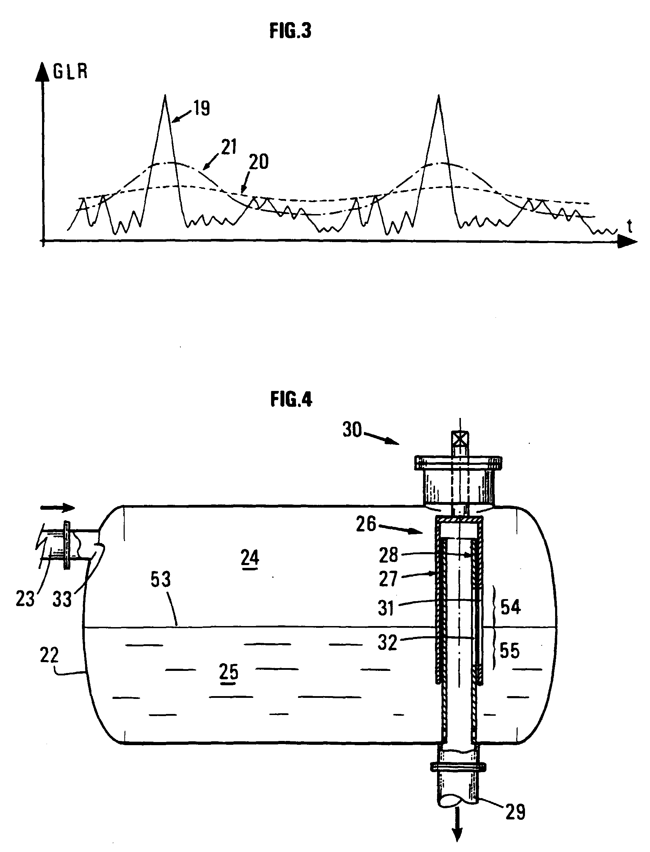

Les courbes de la figure 3 schématisent les variations de GLR en fonction du temps obtenues avec et sans utilisation d'un ballon régulateur selon l'invention.

La courbe 19 représente la variation de GLR obtenue à l'entrée du ballon régulateur 22 pour un fluide polyphasique provenant d'un puits à un instant donné de la production. On note que cette courbe présente de nombreuses variations brutales pour les valeurs de GLR.

En utilisant un ballon régulateur équipé de moyens de prélèvements selon l'invention, le ballon et ses équipements étant adaptés aux caractéristiques du fluide, on obtient une courbe de variation de GLR du fluide en sortie de ballon représentée par la courbe amortie 20.

Toutefois, en cours de production, ou sous l'effet de phénomènes extérieurs, par exemple un effet de houle, les caractéristiques du fluide provenant du puits peuvent être amenées à changer, notamment la valeur de son GLR. Le ballon régulateur et ses moyens de prélèvements ne sont alors plus adaptés de manière optimum, et la courbe amortie 20 se transforme alors en une courbe 21 qui comporte des variations d'amplitudes supérieures à celles de la courbe 20. La présente invention permet de réduire les fluctuations de la courbe 21 à un niveau plus faible, par exemple à un niveau semblable à celui de la courbe 20, grâce à l'utilisation de moyens de prélèvements réglables, alors même que les conditions de production du fluide polyphasique à l'entrée du ballon régulateur ont changé.

L'invention est applicable à toute autre situation où de telles variations et amplitudes peuvent être observées, qu'on soit sur un site terrestre ou sous-marin. Le dispositif selon la présente invention peut être utilisé pour contrôler des écoulements qui sont perturbés notamment du fait des canalisations ou pour l'adaptation à l'évolution de la production des puits ou du nombre de puits de production.

La figure 4 montre schématiquement le dispositif selon l'invention. La référence 22 désigne le ballon régulateur, la référence 23 la canalisation d'arrivée du fluide polyphasique à traiter débouchant dans le ballon régulateur par un orifice 33. Le fluide se déverse dans le ballon régulateur ou la capacité 22 et se sépare en une phase gazeuse 24 et une phase liquide 25 comportant éventuellement des solides tel du sable. Le moyen de prélèvement selon l'invention désigné dans son ensemble par la référence 26 comporte dans le mode de réalisation particulier de la figure 4, un premier tube ou cylindre extérieur 27 entourant un cylindre intérieur 28. Le cylindre extérieur 27 peut tourner sur lui-même par rapport à son axe de révolution 29 grâce à des moyens de contrôle 30. Le tube extérieur 27 comporte par exemple plusieurs ouvertures 31 et le tube intérieur 28 comporte des ouvertures 32. Les ouvertures ou évidements 31 et 32 coopèrent ensemble pour délimiter la section de passage H de l'effluent ou fluide polyphasique. La section de passage sera fonction par exemple des variations du GLR de l'effluent polyphasique à traiter.

Sur la figure 4, on note que les ouvertures ou orifices de passage 32 et 31 sont situés du côté opposé à l'ouverture d'entrée du fluide polyphasique 33 dans le ballon, relativement à l'axe de révolution 29 des tubes 27 et 28 qui sont coaxiaux. Ceci permet de préserver les ouvertures 31 et 32 des remous pouvant résulter de l'introduction du fluide polyphasique dans le ballon régulateur.

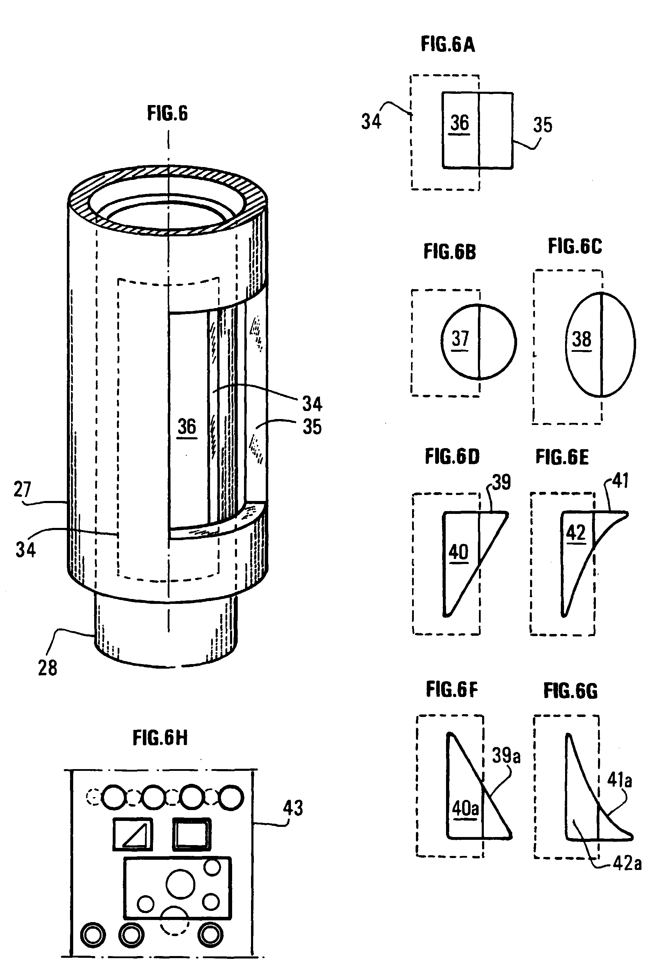

La figure 6 est une vue en perspective du fonctionnement des cylindres 27 et 28. La référence 34 désigne l'ouverture du tube intérieur 28 alors que la référence 35 désigne l'ouverture du tube extérieur 27. La zone de chevauchement 36 correspond à la zone réellement offerte au passage du fluide polyphasique. Sur la figure 6A ont été représentées de manière développée les sections de passage des cylindres 28 et 27 correspondant respectivement aux ouvertures 34 et 35.

Sur la figure 6A, l'ouverture 34 du tube interne et l'ouverture 35 du tube externe sont rectangulaires. La forme de la section de passage réellement offerte à l'effluent polyphasique est une forme rectangulaire. Les figures 6A à 6H représentent de manière non limitative différentes formes d'ouvertures possibles des tubes 27 et 28. Sur les figures 6A à 6G, la forme de l'ouverture confectionnée sur le tube interne est toujours rectangulaire. Sur la figure 6B, la forme de l'ouverture confectionnée sur le tube extérieur 27 est un cercle. La coopération des ouvertures du tube interne et du tube externe permet de laisser libre un segment de cercle 37. Sur la figure 6C, la section libre est un segment d'ellipse 38. La figure 6D représente pour le tube externe, une forme d'ouverture triangulaire 39. La section de passage 40 due à la coopération des deux tubes a dans ce cas la forme d'un trapèze. Sur la figure 6E, l'un des côtés du triangle 39 a été remplacé par une courbe incurvée permettant de mieux adapter la forme de l'ouverture 41 aux caractéristiques du fluide polyphasique.

Sur les figures 6F et 6G, on trouve des formes symétriques pour ce qui est des formes d'ouverture du tube externe représentées aux figures 6D et 6E. Elles sont référencées respectivement 39a et 41a donnant une section de passage respectivement 40a et 42a. Il est bien certain que d'autres formes pourront être utilisées pour résoudre le problème selon la présente invention, ainsi sur la figure 6H, les ouvertures du tube interne pourront être multiples et avoir des formes circulaires de même que les formes des ouvertures du tube externe 43.

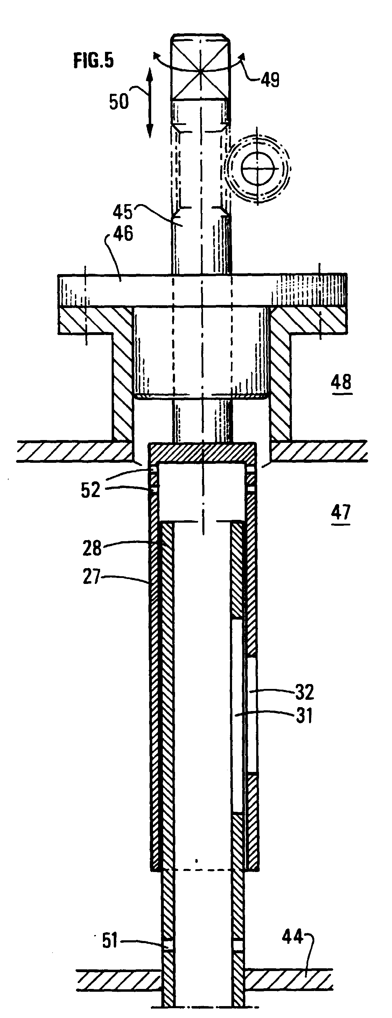

Sur la figure 5 a été représenté, de façon plus détaillée, un mode de réalisation des moyens de prélèvements selon la présente invention. Le tube interne 28 est solidaire de la paroi 44 du ballon régulateur alors que le tube externe 27 est solidaire d'une tige 45 qui traverse un presse-étoupe 46 permettant d'assurer l'étanchéité entre la zone interne 47 du ballon régulateur et le milieu extérieur 48. La tige 45 permet par un moyen de rotation indiqué par les flèches 49 de faire varier la zone d'ouverture laissée libre au passage de l'effluent polyphasique. Cette zone résultant de la coopération des tubes 27 et 28. Selon une variante de la présente invention la tige 45 pourra être dotée d'un mouvement de translation représenté par la flèche 50 permettant notamment de faire varier la section de passage réservée à l'effluent polyphasique. Le tube interne 28 comporte à sa base des orifices de passage 51 qui ne sont pas recouverts par le tube externe 27. De même, le tube externe 27 comporte des orifices de passage 52 à sa partie supérieure qui ne sont pas recouverts par le tube interne 28.

Le fonctionnement du dispositif selon l'invention est commenté ci-après. L'effluent polyphasique arrivant par l'orifice 33 pénètre dans la capacité 22 où il se sépare d'une part en une partie liquide, référence 25 et d'autre part en une partie gazeuse référence 24. Les ouvertures représentées par la référence 54 (figure 4) permettent le passage de gaz alors que les ouvertures référencées 55 (figure 4) permettent le passage de liquide. Si le niveau du liquide dans le ballon-tampon augmente, la zone ou section réservée au passage de liquide augmentera, et la zone ou section réservée au passage de l'effluent gazeux sera réduite. Ceci résulte du fait que le ballon présente une caractéristique d'autorégulation de l'écoulement polyphasique déjà décrite dans le brevet FR 2.642.539.

Comme cela a été dit, il peut être souhaitable pour une meilleure maîtrise des fluctuations de GLR à l'entrée du ballon régulateur de pouvoir agir sur les sections de passage offertes d'une part au liquide et d'autre part au gaz en cours de fonctionnement.

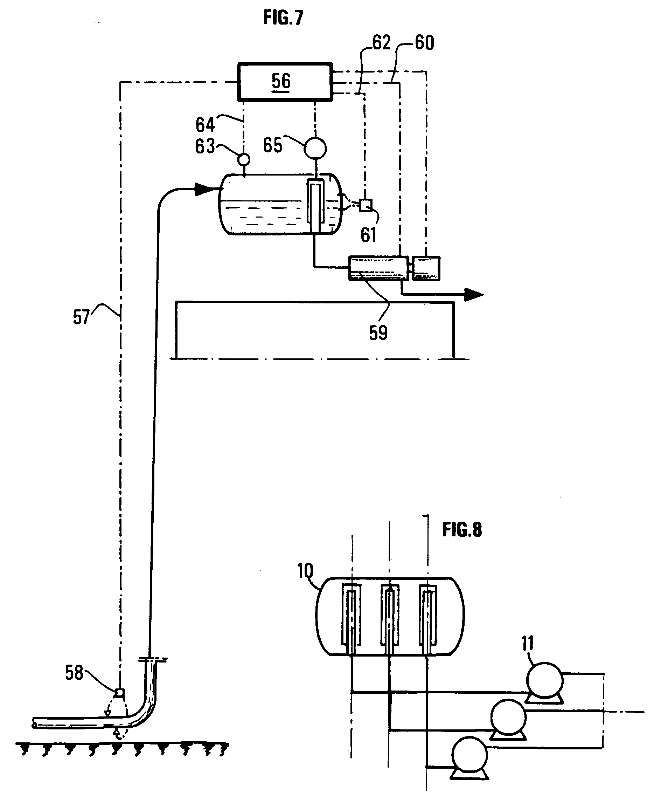

Cet effet est obtenu en faisant varier la position de l'enveloppe ou tube externe 27 par rapport au tube interne 28. On pourra faire varier cette position en fonction, par exemple, des variations du GLR du fluide polyphasique détectée à l'entrée du ballon-tampon. On pourra décider d'effectuer des mouvements du tube externe par rapport au tube interne par exemple après avoir fait la moyenne sur une certaine période des variations du GLR à l'entrée du ballon régulateur. Le contrôle de la position du tube externe par rapport au tube interne pourra être effectué à l'aide d'un calculateur référencé 56 sur la figure 7.

Ce calculateur pourra prendre en compte les paramètres de l'écoulement amont de l'effluent polyphasique, par exemple les paramètres thermodynamiques déterminés à l'aide de capteurs de pression de température et éventuellement la valeur du débit de l'effluent déterminée par un dispositif approprié, l'ensemble de ce capteur étant référencé 58 sur la figure. Les paramètres sont transmis par une ligne 57 au calculateur. Sur la figure 7 l'ensemble de ce capteur amont est situé sensiblement au fond de l'eau. Bien entendu on ne sortira pas du cadre de la présente invention en le plaçant à un autre endroit du circuit amont, par exemple au voisinage de la tête de puits. Cet ensemble pourra comporter, notamment, une prise de pression statique et une prise de pression dynamique. Le calculateur pourra prendre en compte les variations de la différence des valeurs de pression de ces deux prises.
Par ailleurs, ce calculateur pourra prendre en compte des paramètres représentés les conditions de fonctionnement de la pompe 59 grâce à des capteurs reliés par la ligne 60, par exemple en mesurant le couple et la vitesse de rotation de la pompe. De même, on peut déterminer, à l'aide de capteurs appropriés, la pression et le débit de l'effluent polyphasique à la sortie de la pompe. Le calculateur pourra également prendre en compte la valeur du niveau du liquide dans le ballon régulateur, cela grâce à un capteur 61 relié au calculateur par la ligne 62. Enfin, on pourra également mesurer par un capteur 63 la pression régnant dans le ballon régulateur et la transmettre par la ligne 64 au calculateur. Ce calculateur en intégrant ces différentes données agira sur la position relative des cylindres 27 et 28 afin de régler au mieux les caractéristiques de la section de passage réservées à l'effluent polyphasique. L'homme de métier pourra déterminer les différentes formes de section de passage H en fonction des impératifs liés à chaque schéma de production.

On ne sortira pas du cadre de la présente invention en utilisant plusieurs tubes de prélèvements selon l'invention situés dans le même ballon pour alimenter une ou plusieurs pompes voir figure 8.

## Revendications

1. Ballon régulateur convenant au prélèvement d'un effluent polyphasique, ledit ballon comportant des moyens de prélèvement du fluide contenu dans ce ballon, lesdits moyens de prélèvement comportant une section H de passage pour le prélèvement dudit fluide, lesdits moyens de prélèvement s'étendant sur une portion substantielle de la hauteur dudit ballon caractérisé en ce que lesdits moyens de prélèvement (26) comportent des moyens (27, 28) de modifications de ladite section de passage et en ce que lesdits moyens de prélèvement permettent de prélever un effluent polyphasique.

2. Ballon selon la revendication 1 caractérisé en ce que lesdits moyens de prélèvements et de modifications de la section de passage comportent au moins deux surfaces ajourées qui se déplacent l'une par rapport à l'autre de manière à modifier ladite section de passage (cf. figures 6 à 6a).

3. Ballon selon la revendication 2 caractérisé en ce que lesdites surfaces sont des cylindres de révolution de préférence coaxiale (cf. figure 6).

4. Ballon selon la revendication 3 caractérisé en ce que l'un des cylindres est fixe par rapport audit ballon et l'autre mobile en rotation autour de son axe de révolution et en ce que le cylindre mobile comporte des moyens de mise en rotation extérieurs audit ballon (45).

5. Ballon selon l'une des revendications 3 ou 4 caractérisé en ce que lesdits tubes cylindres sont verticaux lorsque le ballon est en position de fonctionnement.

6. Ballon selon l'une des revendications précédentes caractérisé en ce qu'il comporte une enveloppe cylindrique, l'enveloppe cylindrique et les moyens de prélèvements sont positionnés l'un par l'autre pour qu'en position de fonctionnement l'axe de l'enveloppe cylindrique soit vertical alternativement horizontal.

7. Ballon selon l'une des revendications 4 ou 5 ledit ballon comportant un orifice d'entrée de fluide caractérisé en ce que la section passage des moyens de prélèvements est sensiblement située du côté opposé audit orifice relativement à l'axe des moyens de prélèvements.

8. Ballon selon l'une des revendications précédentes caractérisé en ce que les moyens de prélèvements comportent au moins une section fixe supplémentaire située à la partie inférieure desdits moyens de prélèvements pour le prélèvement d'une phase liquide.

9. Ballon selon l'une des revendications précédentes caractérisé en ce que les moyens de prélèvements comportent au moins une section fixe supplémentaire située à la partie supérieure desdits moyens de prélèvements pour le prélèvement d'une phase gazeuse.

10. Ballon selon l'une des revendications précédentes caractérisé en ce que lesdits moyens de prélèvements sont connectés à l'aspiration d'une pompe polyphasique.

11. Ballon selon la revendication 10 caractérisé en ce que les moyens de modifications de la section de passage sont reliés à des moyens d'asservissement adaptés à prendre en compte en fonctionnement une ou plusieurs grandeurs liées aux conditions physiques du fluide à traiter en avant et/ou dans le ballon-tampon et des conditions mécaniques du fonctionnement de la pompe.

12. Procédé de régulation d'un effluent polyphasique comportant les étapes suivantes :
a) introduction de l'effluent polyphasique dans un ballon amortisseur comportant des moyens de prélèvement de l'effluent polyphasique comportant une phase liquide et une phase gaz ;
b) réglage de la section de passage de l'effluent polyphasique des moyens de prélèvement en fonction de conditions d'écoulement déterminées par des variations de GLR.

## Claims

1. Control flask suitable for the extraction of a polyphasic effluent, the said flask comprising means for extracting the fluid contained in this flask, the said extraction means having an H-shaped transfer cross-section for extracting the said fluid, and the said extraction means extending over a substantial portion of the height of the said flask, characterised in that the said extraction means (26) have means (27, 28) for modifying the said transfer cross-section, and in that the said extraction means make it possible to extract a polyphasic effluent.

2. Flask according to Claim 1, characterised in that the said means of extraction and for modifying the transfer cross-section comprise at least two perforated surfaces which are moved relative to one another so as to modify the said transfer cross-section (cf. Figures 6 to 6a).

3. Flask according to Claim 2, characterised in that the said surfaces are cylinders of revolution, which are preferably coaxial (cf. Figure 6).

4. Flask according to Claim 3, characterised in that one of the cylinders is fixed relative to the said flask and the other can move in rotation about its axis of revolution, and in that the mobile cylinder has rotational drive means external to the said flask (45).

5. Flask according to one of Claims 3 or 4, characterised in that the said cylinder tubes are vertical when the flask is in its working position.

6. Flask according to one of the preceding claims, characterised in that it comprises a cylindrical casing, the cylindrical casing and the extraction means are positioned by one another so that, in the working position, the axis of the cylindrical casing is alternately vertical/horizontal [sic].

7. Flask according to one of Claims 4 or 5, the said flask comprising a fluid inlet orifice, characterised in that the transfer cross-section of the extraction means is located substantially on the opposite side from the said orifice in relation to the axis of the extraction means.

8. Flask according to one of the preceding claims, characterised in that the extraction means comprise at least one fixed additional section located in the lower part of the said extraction means for extracting a liquid phase.

9. Flask according to one of the preceding claims, characterised in that the extraction means comprise at least one fixed additional section located in the upper part of the said extraction means for extracting a gas phase.

10. Flask according to one of the preceding claims, characterised in that the said extraction means are connected to the intake of a polyphasic pump.

11. Flask according to Claim 10, characterised in that the means for modifying the transfer cross-section are connected to regulating means designed to take into account during operation one or more variables associated with the physical conditions of the fluid to be treated upstream of and/or inside the buffer flask and the mechanical operating conditions of the pump.

12. Process for controlling a polyphasic effluent, comprising the following steps:
a) introducing the polyphasic effluent into a damping flask comprising means for extracting the polyphasic effluent containing a liquid phase and a gas phase;
b) controlling the transfer cross-section for the polyphasic effluent in the extraction means according to flow conditions defined by GLR variations.

## Patentansprüche

1. Regulierbehälter zur Entnahme eines polyphasischen Fluids, wobei dieser Behälter Entnahmemittel des in diesem Behälter enthaltenen Fluids aufweist, wobei diese Entnahmemittel einen Durchgangsquerschnitt H zur Entnahme dieses Fluids aufweisen, und diese Entnahmemittel sich über einen wesentlichen Anteil der Höhe dieses Behälters erstrecken, **dadurch gekennzeichnet**, dass diese Entnahmemittel (26) Mittel zur Modifizierung (27, 28) dieses Durchgangsquerschnittes umfassen und dass die Entnahmemittel die Entnahme eines polyphasischen Abstromes ermöglichen.

2. Behälter nach Anspruch 1, **dadurch gekennzeichnet**, dass diese Entnahme- und Modifizierungsmittel des Durchgangsquerschnittes mindestens zwei perforierte Oberflächen aufweisen, die sich im Verhältnis zueinander in einer Weise verschieben, um diesen Durchgangsquerschnitt zu modifizieren (siehe Figuren 6 bis 6a).

3. Behälter nach Anspruch 2, **dadurch gekennzeichnet**, dass diese Oberflächen Rotationszylinder sind, die vorzugsweise koaxial sind (siehe Figur 6).

4. Behälter nach Anspruch 3, **dadurch gekennzeichnet**, dass einer der Zylinder in Bezug auf diesen Behälter fixiert und der andere drehbeweglich um seine Rotationsachse ist und dass der bewegliche Zylinder außerhalb dieses Behälters Mittel zum In-Rotation-Versetzen umfasst.

5. Behälter nach einen der Ansprüche 3 oder 4, **dadurch gekennzeichnet**, dass diese zylindrischen Rohre vertikal sind, wenn der Behälter in Funktionsstellung ist.

6. Behälter nach einem der vorhergehenden Ansprüche, **dadurch gekennzeichnet**, dass er eine zylindrische Hülle aufweist, wobei diese zylindrische Hülle und die Entnahmemittel zueinander derart positioniert sind, dass in Funktionsstellung die Achse der zylindrischen Hülle vertikal oder alternativ horizontal ist.

7. Behälter nach einem der Ansprüche 4 oder 5, wobei dieser Behälter eine Fluideintrittsöffnung umfasst, die dadurch gekennzeichnet ist, dass sich der Durchgangsquerschnitt der Entnahmemittel im wesentlichen bezüglich der Achse der Entnahmemittel auf der zu dieser Öffnung gegenüberliegenden Seite befindet.

8. Behälter nach einem der vorhergehenden Ansprüche, **dadurch gekennzeichnet**, dass die Entnahmemittel mindestens einen zusätzlichen, festen Abschnitt umfassen, der im unteren Teil dieser Entnahmemittel, zur Entnahme einer flüssigen Phase gelegen ist.

9. Behälter nach einem der vorhergehenden Ansprüche, **dadurch gekennzeichnet**, dass die Entnahmemittel mindestens einen zusätzlichen, festen Abschnitt umfassen, der im oberen Teil dieser Entnahmemittel, zur Entnahme einer gasförmigen Phase gelegen ist.

10. Behälter nach einem der vorhergehenden Ansprüche, **dadurch gekennzeichnet**, dass diese Entnahmemittel mit der Saugseite einer polyphasischen Pumpe verbunden sind.

11. Behälter nach Anspruch 10, **dadurch gekennzeichnet**, dass die Mittel zur Modifizierung des Durchgangsquerschnittes mit Servomitteln verbunden sind, die so ausgelegt sind, dass sie im Betrieb eine oder mehrere Größen berücksichtigen, die mit den physikalischen Bedingungen des zu behandelnden Fluids vor und/oder in dem Pufferbehälter sowie den mechanischen Betriebsbedingungen der Pumpe zusammenhängen.

12. Verfahren zur Regulierung eines polyphasischen Abstroms, welches die folgenden Stufen umfasst:
a. Einführen des polyphasischen Abstroms in einen Ausgleichsbehälter, der Entnahmemittel des polyphasischen Abstromes umfasst, der eine flüssige und eine gasförmige Phase aufweist;
b. Einstellen des Durchgangsquerschnitts der Entnahmemittel des polyphasischen Abstromes als Funktion der durch die GLR-Veränderungen gegebenen Strömungsbedingungen.
